# EUROPÄISCHE PATENTANMELDUNG

(11) **EP 1 321 871 A1**
(43) Veröffentlichungstag der Anmeldung: **25.06.2003**
(21) Anmeldenummer: 01130364.1
(22) Anmeldetag: 20.12.2001
(51) Int. Cl.: G06F 17/60, G06F 11/00

(54) **Verfahren und Computersystem zur Qualitätssicherung insbesondere der Wartung von Geräten oder Anlagen**

(71) Anmelder: Neumann & Neumann Projekt- und Beratungs GmbH, 82494 Krün (DE)
(72) Erfinder: Neumann, Eva, 82494 Krün (DE); Neumann, Oswald, 82494 Krün (DE)
(74) Vertreter: Flosdorff, Jürgen, Dr.

(57) **Zusammenfassung**

Das Verfahren zur Qualitätssicherung der Wartung eines Gerätes oder einer Anlage sieht vor, daß auf einem Bildschirm mehrere Wartungspositionen des Gerätes oder der Anlage angezeigt werden, die sich jeweils in wenigstens zwei Wartungszuständen befinden können, für die jeweils ein Feld angezeigt ist, daß auf Eingaben des Benutzers hin die die Wartungszustände kennzeichnenden Felder markiert werden und daß nach Markierung der Felder aller Positionen diese Informationen an einen zentralen Rechner abgesandt werden. Das zugehörige Computersystem enthält bevorzugt einen Palm mit einem entsprechenden Softwaresystem.

## Beschreibung

Die Erfindung betrifft ein Verfahren zur Qualitätssicherung insbesondere der Wartung von Geräten oder Anlagen wie Luftfördereinrichtungen, Kälteanlagen, Elektromotoren, Antriebselementen oder Rohrleitungen, wobei diese Aufzählung nur beispielhaft ist und den Anwendungsbereich der Erfindung nicht beschränkt.

In vielen Bereichen der Wartung werden die Wartungsarbeiten durch einen selbständigen Auftragnehmer ausgeführt. Dabei besteht das Problem, daß die durchgeführten Wartungsarbeiten wirkungsvoll kontrolliert werden sollten, um einen hohen Qualitätsstandard bei der Wartung zu gewährleisten. Dies erfordert eine weitgehend objektive Bewertung der durchgeführten Arbeiten und eine schnelle Auswertung, damit die festgestellten Mängel umgehend behoben werden können. Dieses Problem tritt häufig auch dann auf, wenn Wartungsarbeiten von eigenem Personal ausgeführt werden.

Eine derartige Kontrolle ist mit einer reinen Augenscheinsnahme des Wartungszustands eines Gerätes oder einer Anlage nicht erreichbar.

Der vorliegenden Erfindung liegt die Aufgabe zugrunde, eine Lösung für das Problem der Qualitätssicherung und Qualitätssteigerung von an einem Gerät oder an einer Anlage durchgeführten Wartungsmaßnahmen anzugeben.

Diese Aufgabe wird erfindungsgemäß durch ein Verfahren mit den Merkmalen des Patentanspruchs 1 gelöst.

Ein erfindungsgemäßes Computersystem zur Durchführung des Verfahrens ist durch die Merkmale des Patentanspruchs 7 gekennzeichnet.

Vorteilhafte Ausgestaltungen der Erfindung ergeben sich aus den abhängigen Ansprüchen.

Das erfindungsgemäße Verfahren sieht vor, daß auf einem Bildschirm bzw. Anzeigefeld eines Rechners mehrere Wartungspositionen eines Gerätes oder einer Anlage angezeigt werden, die sich jeweils in wenigstens zwei Wartungszuständen befinden können, für die jeweils ein Feld vorgesehen ist. Auf Eingaben des Benutzers hin werden die die angetroffenen Wartungszustände kennzeichnenden Felder markiert, wobei nach Markierung der Felder aller Positionen diese Informationen an einen Empfänger, bevorzugt einen zentralen Rechner abgesandt werden.

Bei den jeweils wenigstens zwei Wartungszuständen der einzelnen Positionen handelt es sich bevorzugt um einen mängelfreien und einen mangelhaften Wartungszustand, wobei auch mehr als zwei Wartungszustände für jede Position vorgesehen sein können.

Der von dem Benutzer mitgeführte Rechner ist vorzugsweise ein Palm, der aufgrund seiner kleinen Abmessungen bequem mitgeführt werden kann. Die Eingaben des Benutzers erfolgen durch Druck auf die Felder des Bildschirms bzw. Anzeigefeldes des Palms.

Weiter wird mit Vorteil vorgeschlagen, daß auf dem Bildschirm des Rechners außerdem das jeweilige Datum und die jeweilige Uhrzeit angezeigt werden, bei denen die Überprüfung bzw. Kontrolle erfolgt. Dies hat unter anderem den Vorteil, daß dokumentiert werden kann, wann sich der Benutzer - der Kontrolleur des Wartungsvorgangs - an dem Ort des Gerätes oder der Anlage befunden hat.

Weiter wird vorgeschlagen, daß der zentrale Rechner die übersandten Informationen in der Form auswertet, daß er eine Mängelliste, die nur die beanstandeten Positionen enthält, und gegebenenfalls einen Qualitätsbericht erstellt. Die Mängelliste kann über das Sendersystem an einen PC am Standort der Untersuchung ausgedruckt werden.

Weiter wird mit großem Vorteil vorgeschlagen, daß jedem die Wartungszustände der zu kontrollierenden Positionen bezeichnendem Feld in dem Softwaresystem eine vorgegebene Punktzahl zugeordnet ist und daß in einem weiteren Verfahrensschritt die bei dem jeweiligen kontrollierten Wartungsvorgang erreichte Punktzahl addiert wird. Durch Vergleich mit der maximal erreichbaren Punktzahl läßt sich hochgradig objektiv die Qualität des Wartungsvorganges ermitteln.

Weiter kann vorgesehen sein, daß mangelhafte Zustände einer oder mehrere Positionen, beispielsweise ein mangelhaft gereinigter Anlagenteil oder ein nicht ausgetauschtes Geräteteil durch eine elektronische Kamera erfaßt werden, die ebenfalls das zugehörige Datum und den Zeitpunkt der Aufnahme anzeigt.

Mit dem erfindungsgemäßen Verfahren ist eine sofortige Auswertung der festgestellten Wartungszustände von bestimmten Positionen eines Gerätes oder einer Anlage oder dergleichen ermöglicht, so daß umgehend eine Mängelliste erstellbar ist, auf deren Grundlage die Mängel schnell behoben werden können, so daß eine gegebenenfalls ausreichende Qualität gesichert oder eine unzureichende Qualität verbessert werden kann.

Das erfindungsgemäße Computersystem zur Qualitätsicherung insbesondere der Wartung eines Gerätes oder einer Anlage oder dergleichen enthält bevorzugt einen Palm, der aufgrund seiner geringen Größe bequem mitführbar und bedienbar ist, mit einem Softwaresystem, das auf dem Anzeigefeld bzw. Bildschirm des Palms nacheinander mehrere Wartungspositionen des Gerätes oder der Anlage anzeigt, die sich jeweils in wenigstens zwei Wartungszuständen befinden können, für die jeweils ein Feld angezeigt ist, wobei auf Eingaben des Benutzers hin die die Wartungszustände kennzeichnenden Felder markiert werden, und mit einem Sender, der die in den Palm eingegebenen Informationen an einen zentralen Rechner zur Auswertung übermittelt.

Mit dem erfindungsgemäßen Computersystem können beispielsweise folgende Wartungsarbeiten wirkungsvoll kontrolliert werden:
a) Wartung von Luftfördereinrichtungen:
   - Ventilatoren auf Verschmutzung, Beschädigung, Korrosion und Befestigung prüfen,
   - Laufrad auf Unwucht prüfen,
   - Schaufelverstellvorrichtung auf Funktion prüfen,
   - Lagerung auf Geräusch prüfen,
   - Lagerung schmieren,
   - flexible Verbindung auf Dichtheit prüfen,
   - Schwingungsdämpfer auf Funktion prüfen,
   - Schutzgitter auf Funktion prüfen,
   - Drallregler auf Funktion prüfen,
   - Entwässerung auf Funktion prüfen.
b) Wartung von Kälteanlagen:
   - Verdichter-Betriebsmanometer auf Anzeigegenauigkeit prüfen,
   - Temperatur messen,
   - Verdampfungstemperatur am Verdampfer messen,
   - Sauggastemperatur vor dem Verdichter messen,
   - Verdichtungsenddruck messen,
   - Verdichtungsendtemperaturen messen,
   - Ölstand am Schauglas prüfen,
   - Öl auf Säuregehalt prüfen,
   - Öldruck mit Manometer messen,
   - Öldruck nachstellen,
   - Öldruckdifferenzschalter auf Funktion prüfen,
   - Öldruckdifferenzschalter nachstellen,
   - Öltemperatur vor und nach dem Ölkühler messen,
   - Wassertemperatur vor und nach dem Ölkühler messen,
   - Ölabscheider auf Funktion prüfen,
   - Kurbelwannenheizung auf Funktion prüfen,
   - Anlaufentlastung auf Funktion prüfen,
   - Leistungsregelung auf Funktion prüfen.
c) Wartung von Elektromotoren:
   - Auf Verschmutzung, Beschädigung, Korrosion, Befestigung und Drehrichtung prüfen,
   - Lagerung auf Geräusch prüfen,
   - Lagerung schmieren, reinigen,
d) Wartung von Antriebselementen:
   - Riemenantriebe auf Verschmutzung, Beschädigung, Verschleiß, Spannung und Fluchtung prüfen,
   - Nachstellen,
   - Riemen auswechseln,
   - Schutzeinrichtung auf Beschädigung, Befestigung und Funktion prüfen,
   - Reinigen
e) Wartung von Rohrleitungen:
   - Auf Beschädigung, Dichtheit und Befestigung prüfen,
   - Isolierung auf Beschädigung prüfen (Sichtprüfung),
   - Thermometer auf Beschädigung prüfen,
   - Manometer auf Beschädigung prüfen,
   - Kompensatoren auf Beschädigung prüfen (Sichtprüfung),
   - Flüssigkeitsstand prüfen,
   - Flüssigkeit nachfüllen,
   - Sicherheitseinrichtung auf Funktion prüfen,
   - Entlüften.

Die in das Computersystem eingegebenen Daten werden umgehend ausgewertet, wobei eine Mängelliste erstellt werden kann, mit der die festgestellten Mängel umgehend behoben werden können. Bei Anwendung des erfindungsgemäßen Verfahrens läßt sich die Qualität eines Wartungsvorgangs feststellen und auf dem gewünschten Niveau sichern.

## Patentansprüche

1. Verfahren zur Qualitätssicherung insbesondere der Wartung eines Gerätes oder einer Anlage, bei dem
- auf einem Bildschirm mehrere Wartungspositionen des Gerätes oder der Anlage angezeigt werden, die sich jeweils in wenigstens zwei Zuständen befinden können, für die jeweils ein Feld angezeigt ist,
- auf Eingaben des Benutzers hin die die Zustände kennzeichnenden Felder markiert werden,
- nach Markierung der Felder aller Positionen diese Informationen an einen zentralen Rechner abgesandt werden.

2. Verfahren nach Anspruch 1,
bei dem die wenigstens zwei Wartungszustände ein mangelfreier und ein mangelhafter Wartungszustand sind.

3. Verfahren nach Anspruch 1 oder 2,
bei dem außerdem das jeweilige Datum und die jeweilige Uhrzeit auf dem Bildschirm angezeigt werden.

4. Verfahren nach einem der Ansprüche 1 bis 3,
bei dem die Eingaben durch Druck auf den Bildschirm eines Palms erfolgen.

5. Verfahren nach einem der Ansprüche 1 bis 4,
bei dem mangelhafte Wartungszustände durch eine elektronische Kamera erfaßt werden.

6. Verfahren nach einem der Ansprüche 1 bis 4,
bei dem jedem Feld eine Punktzahl zugeordnet ist und die erreichte Punktzahl addiert wird.

7. Computersystem zur Qualitätssicherung insbesondere der Wartung eines Gerätes oder einer Anlage, mit
- einem Palm mit einem Softwaresystem, das auf einem Bildschirm mehrere Wartungspositionen der Anlage anzeigt, die sich jeweils in wenigstens zwei Wartungszuständen befinden können, für die jeweils ein Feld angezeigt ist, wobei auf Eingaben des Benutzers hin die die Wartungszustände kennzeichnenden Felder markiert werden.

8. Computersystem nach Anspruch 7,
ferner mit einem Sender, der die in dem Palm gespeicherten Informationen an einen zentralen Rechner zur Auswertung übermittelt.

9. Computerprogramm zur Ausführung des Verfahrens nach einem der Ansprüche 1 bis 6.
